# EUROPEAN PATENT APPLICATION

(11) **EP 4 796 470 A1**
(43) Date of publication of application: **26.08.2026**
(21) Application number: 26159683.7
(22) Date of filing: 19.02.2026
(51) Int. Cl.: B65G 47/90, B65G 57/06, B65G 57/24, B65G 61/00

(54) **GRIPPING HEAD WITH A ROLLING BELT AND RELATED METHOD**

(30) Priority: 20.02.2025 IT 202500003399
(71) Applicant: Mako S.r.l., 43010 Fontevivo (PR) (IT)
(72) Inventor: FERDENZI, MAURIZIO, FELEGARA (PR) (IT)
(74) Representative: Silva, Valentina

(57) **Abstract**

Gripping head (100) for groups of products (200) arranged to form a layer comprising a main frame (110) comprising two opposite side panels (111, 112) with which a support (120) is associated at the top to be fixed and/or anchored to a robotic handling structure (400) and to which a flexible loading plane (150, 151, 152) is associated at the bottom suitable for supporting said groups of products (200), movable between an unloading position (S) of the products (200), wherein it defines a lower opening (130) of the frame (110) and a support position (C) of the products (200), wherein it occludes, at least partially, or totally, said lower opening (130) and configured to move from the support position (C) to the unloading position (S) and vice versa following an articulated path along at least two different directions wherein said gripping head (100) comprises a rolling belt (160, 161, 162) which is shaped in a closed loop to wind the flexible loading plane (150) and adapted to slide around said flexible loading plane (150).

## Description

### FIELD OF APPLICATION OF THE INVENTION

The present invention relates to the field of palletising machines.

In particular, these are machines that allow to pick up a layer of products to deposit it in a specific area or above a previous layer to form a plurality of layers adapted to form a pallet.

More precisely, the invention relates to a gripping head for groups of products arranged to form a layer, said head being installable on a palletising machine.

### PRIOR ART

Machines for picking up, transferring and depositing groups of products arranged to form a layer are known in the state of the art.

By the term products we mean loose products, such as single containers i.e. primary packaging, for example bottles, jars, cans, sacks, etc., or products containing a plurality of containers i.e. secondary packaging, for example bundles, cartons, crates, etc.

The layer preparation is typically handled by a set of manipulators or other devices that orient and arrange the single products on preparation/forming belt or tables, to be then suitably compacted and introduced on a device responsible for transferring them onto the pallet, which is generally called gripping head.

A layer of product is transferred onto the gripping head and said layer is then superimposed on a previous layer. The layer may therefore be composed of loose products or packaged products.

Said gripping heads are generally installed on robots and are generally configured to house an entire layer of products.

The term robot refers to a structure capable of performing movements in at least two axes, such as Cartesian structures or anthropomorphic robots, known to a person skilled in the art.

The most common gripping solutions typically moved by robotic arms are heads that are referred to in technical jargon as:
- idle roller curtain head
- translating plane head
- fork gripping head
- layer gripping head without support plane
- flexible plane head

What differentiates the various gripping heads is substantially the type of plane on which the layer picked up by the head rests, both due to how said plane is shaped and how it moves while passing from gripping to releasing the layer and vice versa.

For example, the idle roller curtain gripping head has the advantage of a small head dimension. This allows for very compact plant layouts, reducing space and palletising operating times.

However, the sliding of the product on the rollers may create problems, especially in the case of primary packaging products that are in particular unstable and tend to fall apart.

Furthermore, as the rollers are generally idle, they are not able to act on the layer to introduce it into the head, so it is often necessary to combine this head with an additional introduction device, such as a pusher.

Some solutions provide that the layer is introduced into the idle roller curtain head by pushing the preparation/forming belt upstream, but in this case a controlled insertion is not guaranteed. In addition, another disadvantage of the idle roller curtain head is that the deposition of layers takes place by gravity and is bound to a fall height that is higher than the roller diameter and therefore to a high product fall height that is not suitable for all types of products.

On the other hand, the translating plane gripping head allows deposition from a low fall height.

In this case as well, the layer is introduced with the aid of a pusher, which may also be on board the head. However, a disadvantage of this solution is due to the fact that the layer is deposited by translating the plane and thus involving an increase in the dimension and in the additional space required to handle the opening of the translating plane. This does not allow for compact plant layouts, which also increases palletising operating times.

The gripping head with forks or combs allows to lift the product with no need for pushing steps in order to introduce it. The product is picked up by special roller conveyors that allow the forks to be inserted. Storage takes place at low altitudes, but the space required for the plant is considerable.

Moreover, it is a head that cannot be used for all types of products, especially primary packaging.

The flexible plane gripping head allows deposition at low altitudes and does not imply notable space, but requires synchronised operation with devices such as retractable belts or a pusher on board the head. It is therefore complex to handle.

The gripping head without support surface allows the handling of a limited number of products, as the layer is supported only by lateral pressure, which must be enough to counteract the weight force, without damaging the product.

Therefore, each of these gripping heads has functional limitations that prevent use thereof with all types of products, both packaged and loose. The limitation related to the significant space required to operate some of these heads must also be taken into account.

### EXPOSURE AND ADVANTAGES OF THE INVENTION

The problem underlying the present invention is to make available a palletising head with a rolling belt and related method, designed to overcome, at least partially, one or more of the above-mentioned limitations with reference to the above-mentioned prior art.

In particular, the object of the present invention is a palletising head with a rolling head and related method that allows full control of the incoming dynamics of products.
A further object of the present invention is a palletising head with a rolling belt and related method that allows to overcome the need for introduction devices external to the head.

An object is also to guarantee the integrity of the products by ensuring a controlled-release deposition with the possibility to handle a wide range of palletising schemes.

Additionally, thanks to the palletising head with rolling belt and related method, it is possible to obtain space-saving solutions and greater flexibility in plant layout.

The above-mentioned problem and objects are solved by the present invention by means of a palletising head with a rolling belt and related method comprising one or more of the features expressed in the following claims.

In particular, the present invention makes available palletising heads with a rolling belt for groups of products arranged to form a layer.

In particular, the palletising head comprises a main frame.

Preferably the main frame comprises two opposite side panels.

Preferably the main frame is associated at the top with a support to be fixed and/or anchored to a robot handling structure.

Preferably the main frame is associated at the bottom with a flexible loading plane suitable to support said groups of products.

Preferably, the flexible loading plane is movable between a product unloading position, wherein it defines a lower opening of the frame, and a product support position, wherein it occludes, at least partially, or totally, said lower opening.

Preferably the flexible loading plane is configured to move from the support position to the unloading position and vice versa.

Preferably, the flexible loading plane follows an articulated path along at least two different directions.

Preferably said gripping head comprises a rolling belt.

Preferably said rolling belt is shaped in a closed loop to wind the flexible loading plane.

Preferably said rolling belt is adapted to slide around said flexible loading plane.

Preferably said gripping head comprises a front flexible loading plane and a rear flexible loading plane.

Preferably said front flexible loading plane and said rear flexible loading plane are movable between the product unloading position wherein they move away from each other and a product support position wherein they move closer to each other.

Preferably said front flexible loading plane and said rear flexible loading plane are configured to move from the support position to the unloading position and vice versa following an articulated path along at least two different directions.

Preferably said gripping head comprises a front rolling belt.

Preferably said front rolling belt is wound in a loop.

Preferably said front rolling belt is adapted to slide around said front flexible loading plane.

Preferably said gripping head comprises a rear rolling belt.

Preferably, said rear rolling belt is wound in a loop.

Preferably said rear rolling belt is adapted to slide around said rear flexible loading plane.

Preferably, the flexible loading plane, when it is in the product support position, is arranged on a horizontal plane.

Preferably the front flexible loading plane, when it is in the support position of the products, is arranged on a horizontal plane.

Preferably the rear flexible loading plane, when it is in the product unloading position, is arranged on a horizontal plane.

Preferably, the flexible loading plane, when it is in the product unloading position, is mainly arranged on a vertical plane.

Preferably said plane extends towards the support.

Preferably, the front flexible loading plane, when it is in the product unloading position, is mainly arranged on a vertical plane.

Preferably said plane extends towards the support.

Preferably, the rear flexible loading plane, when it is in the support position of the products, is mainly arranged on a vertical plane.

Preferably said plane extends towards the support.

Preferably, the flexible loading plane passes from the support position to the unloading position and vice versa performing a curved path.

Preferably performing a rotation of at least 90°.

Preferably, the rotation takes place around a winding element.

Preferably, the front flexible loading plane passes from the support position to the unloading position and vice versa performing a curved path.

Preferably performing a rotation of at least 90°.

Preferably, the rotation takes place around a winding element.

Preferably, the rear flexible loading plane passes from the support position to the unloading position and vice versa performing a curved path.

Preferably performing a rotation of at least 90°.

Preferably, the rotation takes place around a winding element.

Preferably the gripping head comprises a first drive unit to move said flexible loading plane between the unloading position and the support position and vice versa.

Preferably the gripping head comprises a first drive unit to move said front flexible loading plane between the unloading position and the support position and vice versa.

Preferably the gripping head comprises a first drive unit to move said rear flexible loading plane between the unloading position and the support position and vice versa. Preferably the gripping head comprises a first front drive unit and a first rear drive unit.

Preferably said first front drive unit and first rear drive unit are mechanically connected respectively to the front loading plane and rear loading plane to move them closer to/away from each other, independently of each other.

Preferably the first drive unit, and/or the first front drive unit and/or the first rear drive unit is installed on the frame near the support.

Preferably, the gripping head comprises a second drive unit to drive the rolling belt to slide around the flexible loading plane.

Preferably, said second drive unit drives the rolling belt bidirectionally, around the flexible loading plane.

Optionally, the gripping head comprises a second front drive unit mechanically connected to the front rolling belt to have it slide around the front flexible loading plane.

Preferably said second front drive unit drives the rolling belt bidirectionally, around the front flexible loading plane.

Optionally, the gripping head comprises a second rear drive unit mechanically connected to the rear rolling belt to have it slide around the rear flexible loading plane.

Preferably said second rear drive unit drives the rolling belt bidirectionally, around the rear flexible loading plane.

Preferably the second drive unit is installed on the frame.

Preferably said second drive unit is mechanically associated with the side panels, near the flexible plane.

Preferably said second front drive unit is placed below the flexible loading plane when it is in the support position.

Preferably the second front drive unit is installed on the frame.

Preferably said second front drive unit is mechanically associated with the side panels, near the flexible plane.

Preferably said second front drive unit is placed below the flexible loading plane when it is in the support position.

Preferably the second rear drive unit is installed on the frame.

Preferably said second rear drive unit is mechanically associated with the side panels, near the flexible loading plane.

Preferably said second rear drive unit is placed below the flexible loading plane when it is in the support position.

Preferably, the flexible loading plane comprises a plurality of modules, each arranged adjacent and parallel to the other.

Preferably the flexible loading plane comprises pulling elements to enable handling thereof, mechanically connected to at least one module and preferably at the two ends facing the side panels.

Preferably the pulling elements slide inside guides.

Preferably said guides are arranged at the side panels.

Preferably, said modules are coated with low-friction materials, preferably polyethylene or are coated with polytetrafluoroethylene.

Preferably the gripping head comprises side containment elements.

Preferably said side containment elements are positioned on an upper surface of the flexible loading plane.

Preferably said side containment elements are positioned on an upper surface of the front flexible loading plane.

Preferably said side containment elements are positioned on an upper surface of the rear flexible loading plane.

Preferably, said side containment elements engage on the side edges of the rolling belt.

Preferably said side containment elements engage on the side edges of the front rolling belt.

Preferably said side containment elements engage on the side edges of the rear rolling belt.

Preferably, said side containment elements are adapted to prevent the transversal movement, i.e. orthogonal to an advancement direction.

Preferably said side containment elements are each mechanically installed on a respective module.

Preferably, said side containment elements are mechanically installed on an upper side of the module.

Preferably, said side containment elements comprise an extension directed from the side panels towards the centre of the flexible loading plane, adapted to contact the upper portion of the rolling belt to prevent or limit detachment from the upper surface of the flexible loading plane.

Preferably, said side containment elements comprise an extension directed from the side panels towards the centre of the front flexible loading plane, adapted to contact the upper portion of the rolling belt to prevent or limit detachment from the upper surface of the flexible loading plane.

Preferably, said side containment elements comprise an extension directed from the side panels towards the centre of the rear flexible loading plane, adapted to contact the upper portion of the rolling belt to prevent or limit detachment from the upper surface of the flexible loading plane.

Preferably the gripping head comprises support elements.

Preferably, said support elements are fixed to the side panels and extend towards the centre of the flexible loading plane adapted to contact a lower portion of the rolling belt to prevent or limit detachment thereof from a lower surface of the flexible loading plane.

Preferably said support elements are fixed to the side panels and extend towards the centre of the front flexible loading plane adapted to contact a lower portion of the front rolling belt to prevent or limit detachment thereof from a lower surface of the front flexible loading plane.

Preferably said support elements are fixed to the side panels and extend towards the centre of the rear flexible loading plane adapted to contact a lower portion of the rear rolling belt to prevent or limit detachment thereof from a lower surface of the rear flexible loading plane.

Preferably said rolling belt is of the modular chain type.

Preferably, said front rolling belt is of the modular chain type.

Preferably, said rear rolling belt is of the modular chain type. Preferably, the rolling belt comprises anti-slip elements comprising winding and/or tensioning rollers and/or support planes. Preferably, the front rolling belt comprises anti-slip elements comprising winding and/or tensioning rollers and/or support planes. Preferably, the rear rolling belt comprises anti-slip elements comprising winding and/or tensioning rollers and/or support planes.

Preferably, the flexible loading plane comprises a support, positioned at the second drive unit configured to prevent slippage of the rolling belt during movement.

Preferably, the front flexible loading plane comprises a support, positioned at the second front drive unit configured to prevent slippage of the rolling belt during movement.

Preferably, the rear flexible loading plane comprises a support, positioned at the second rear drive unit configured to prevent slippage of the rolling belt during movement.

Preferably the gripping head comprises a compaction device mechanically associated with the main frame.

Preferably, the compaction device comprises side walls opposite to each other and arranged alongside the side walls.

Preferably a front and rear wall opposite to each other and arranged orthogonally to the side walls.

Preferably said front and rear side walls being movable closer towards the centre of the frame to compact the group of products.

In particular, the present invention also makes available an operating method for picking up, from a preparation/forming conveyor, groups of products arranged to form a layer by means of a robotic structure which handles a gripping head.

Preferably, said head is associated at the bottom with a flexible loading plane suitable to support said groups of products, and cause said flexible loading plane and/or front flexible loading plane and/or rear flexible loading plane to assume the loading position in which it occludes at least partially, or totally, the lower opening of the gripping head so that it is parallel to the preparation/forming conveyor.

Preferably, said method provides to position said flexible loading plane in continuity with the preparation/forming conveyor supporting the groups of products to be picked up.
Preferably, said method provides to position said front flexible loading plane in continuity with the preparation/forming conveyor supporting the groups of products to be picked up.

Preferably, said method provides to activate the preparation/forming conveyor and along the same direction have the rolling belt slide along the flexible loading plane until the groups of products are completely transferred from the preparation/forming conveyor into the gripping head.

Preferably, said method provides to activate the preparation/forming conveyor and along the same direction have the front rolling belt slide along the front flexible loading plane until the groups of products are completely transferred from the preparation/forming conveyor into the gripping head.

Preferably, said method provides to activate the preparation/forming conveyor and along the same direction have the rear rolling belt slide along the rear flexible loading plane until the groups of products are completely transferred from the preparation/forming conveyor into the gripping head.

Preferably said method provides to stop the sliding of the rolling belt.

Preferably, said method provides to position the gripping head above the area where the groups of products are to be deposited.

Preferably, said method provides to lead the flexible loading plane to the product unloading position, placing it mainly in a vertical direction.

Preferably by means of said flexible plane, it is arranged in a vertical direction by a rotation of approximately 90°.

Preferably, said method provides to lead the front flexible loading plane to the product unloading position, placing it mainly in a vertical direction.

Preferably by means of said front flexible plane, it is arranged in a vertical direction by a rotation of approximately 90°.

Preferably, said method provides to lead the rear flexible loading plane to the product unloading position, placing it mainly in a vertical direction.

Preferably by means of said rear flexible plane it is arranged in a vertical direction by a rotation of approximately 90°.

Preferably, said method provides that during the transfer of the groups of products from the preparation/forming conveyor into the head, the rolling belt has a speed equal to or lower than that of the preparation/forming conveyor.

Preferably, said method provides that during the transfer of the groups of products from the preparation/forming conveyor into the head, the front rolling belt has a speed equal to or lower than that of the preparation/forming conveyor.

Preferably, said method provides that during the transfer of the groups of products from the preparation/forming conveyor into the head, the rear rolling belt has a speed equal to or lower than that of the preparation/forming conveyor.

Preferably, said method provides that during the transfer of the groups of products from the preparation/forming conveyor into the head, the rolling belt performs stops and/or slowdowns preferably at constant intervals.

Preferably, said method provides that during the transfer of the groups of products from the preparation/forming conveyor into the head, the front rolling belt performs stops and/or slowdowns preferably at constant intervals.

Preferably, said method provides that during the transfer of the groups of products from the preparation/forming conveyor into the head, the rear rolling belt performs stops and/or slowdowns preferably at constant intervals.

Preferably, said method provides to make it possible, during the deposition step, to modify, through the speed change stopping of the movable planes, the design of the layer, making it compact or with central spacing.

Preferably, said method provides that while the flexible loading plane passes from the support position to the unloading position, the rolling belt advances in the opening direction or in the opposite direction.

Preferably, said method provides that while the front flexible loading plane passes from the support position to the unloading position, the front rolling belt advances in the opening direction or in the opposite direction.

Preferably, said method provides that while the rear flexible loading plane passes from the support position to the unloading position, the rear rolling belt advances in the opening direction or in the opposite direction.

Preferably, said method provides that the groups of products, once loaded onto the flexible loading plane, are compacted.

Preferably said method provides that the groups of products, once loaded onto the flexible front loading plane, are compacted.

Preferably said method provides that the groups of products, once loaded onto the flexible rear loading plane, are compacted.

An object of the invention is also a palletising machine comprising a gripping head fixed and/or anchored to a robotic handling structure, said gripping head being adapted to pick up, from a preparation/forming conveyor, groups of products arranged to form a layer and adapted to deposit them in a storage area.

These and other objects are reached thanks to the features of the invention as set forth in the independent claims. The dependent claims outline preferred and/or particularly advantageous aspects of the invention.

Said objects and advantages are all achieved by the palletising head with a rolling belt and related method, subject matter of the present invention, which is characterised by what provided for in the hereafter reported claims.

### BRIEF DESCRIPTION OF THE DRAWINGS

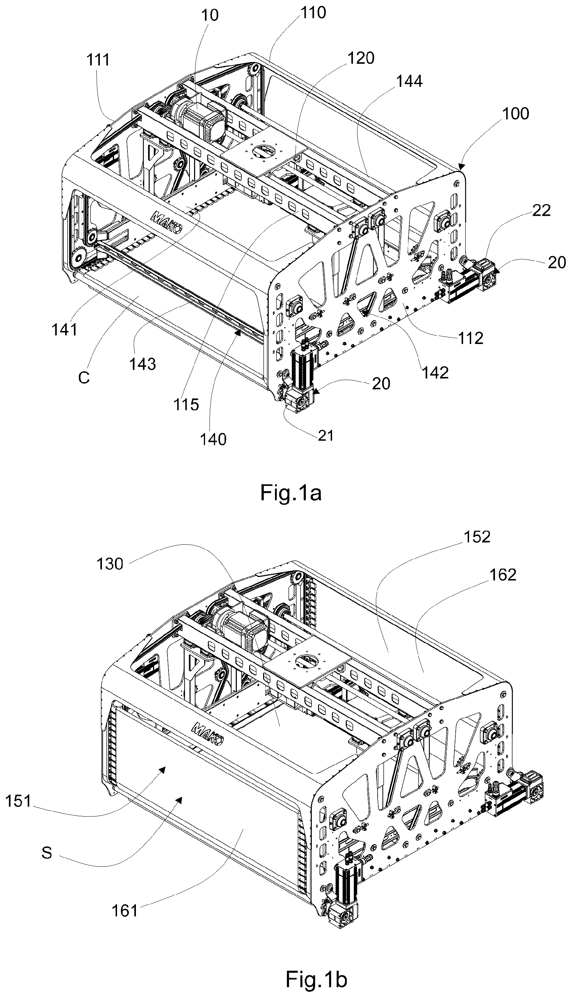

- Figure 1a: illustrates, in an axonometric view, a gripping head in the product support position C;
- Figure 1b: illustrates, in an axonometric view, a gripping head in the product unloading position S;

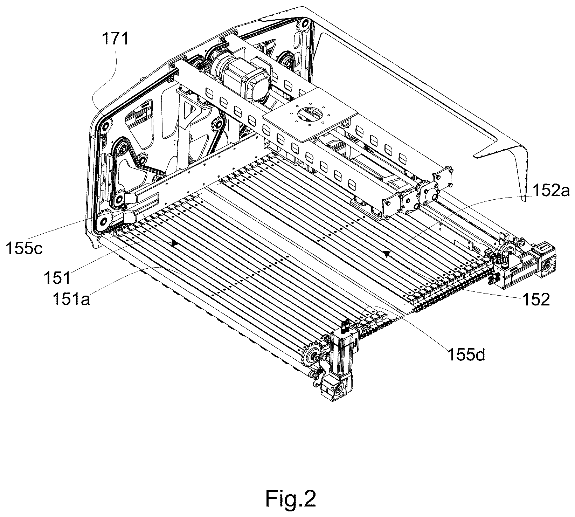

- Figure 2: illustrates, in an axonometric view, a gripping head with the flexible loading plane in view;
- Figure 3: illustrates, in an axonometric view, a detail of the flexible loading plane;

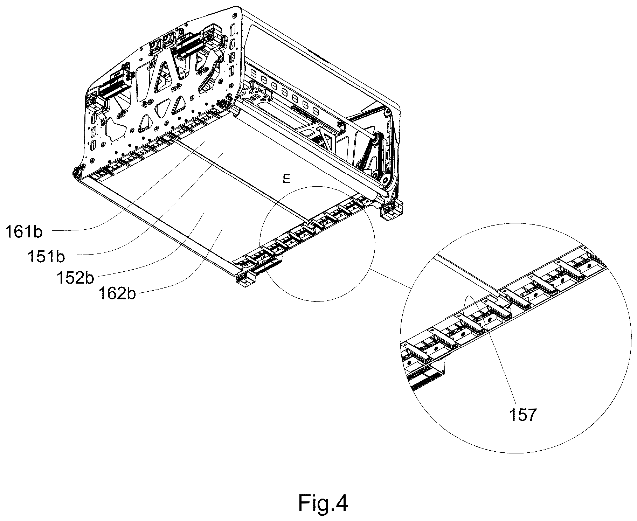

- Figure 4: illustrates, in a different axonometric view, a gripping head in the support position C and related detail;
- Figure 5: illustrates, in a side view, a second embodiment of the gripping head in the support position C of the products;
- Figure 6: illustrates, in a side view, a second embodiment of the gripping head in the unloading position S of the products;
- Figure 7: illustrates, in a side view, a first embodiment of the gripping head in the support position C of the products;
- Figure 8: illustrates, in an axonometric view, a detail of the flexible loading plane;

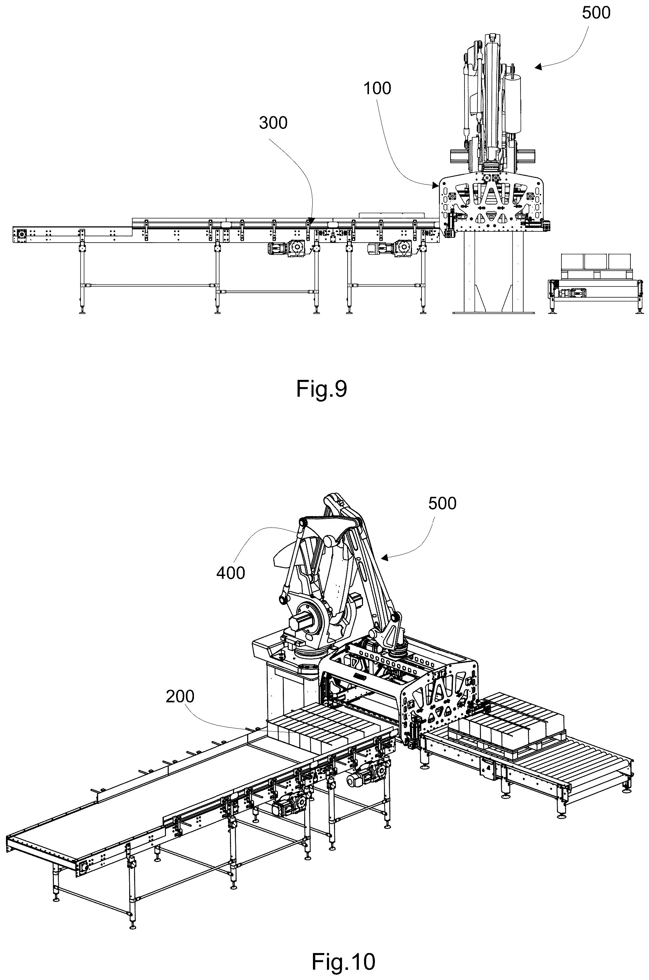

- Figure 9: illustrates, in a side view, a palletising machine;
- Figure 10: illustrates, in an axonometric view, a palletising machine.

### DESCRIPTION OF THE INVENTION

Referring in particular to the figures, a palletising head with a rolling belt is referred to as 100.

In particular, the gripping head 100 is configured to pick up a group of products 200 forming a layer or a portion of a layer.

According to an aspect of the invention, a robotic structure 400 handles the gripping head 100.

In particular, the gripping head 100 is led alongside a preparation/forming conveyor 300 wherein groups of products 200 have previously been arranged to form a layer. The head 100 picks up the group of products 200 from the preparation/forming conveyor 300.

Once the group of products 200 has been picked up, the robotic structure 400 moves the head 100 towards a special area where it deposits said group of products 200 to form the layers of a palletised load.

The gripping head 100 generally comprises a main frame 110, configured to be the load-bearing structure for the various parts.

Preferably the main frame 110 comprises two side panels 111, 112 which are opposite and preferably parallel to each other.

The side panels 111, 112 are arranged substantially along vertical planes.

The main frame 110 may comprise connecting elements 115 between the side walls 111, 112 such as beams, tubular elements, etc., adapted to create the connection and define a load-bearing structure with said side walls 111, 112.

According to a preferred embodiment, the frame comprises a support 120 connected to the two side panels 111, 112 and/or connecting elements 115.

In particular, said support 120 is associated with said side panels 111, 112, at an upper portion thereof.

Advantageously, the support 120 is configured to be fixed/anchored to the robotic handling structure 400, or any other device adapted to move the gripping head 100.

Said support 120 may, for example, be a steel flange, or it may be made of different shapes and different materials, as known to a person skilled in the art, without thereby limiting the protective scope of the invention.

The main frame 110 may also comprise a set of steel sheets and struts, or tie rods, which provide strength and stability.

According to an aspect of the invention, the gripping head 100 comprises at least one flexible loading plane 150.

In particular, said flexible loading plane 150 is associated with a lower portion of said side panels 111, 112.

Said flexible loading plane 150 is suitable to support groups of products 200.

The term flexible loading plane refers to an articulated plane, rigid enough to support products 200, but with the ability to move following not only straight but also curved trajectories, as will be further explained below.

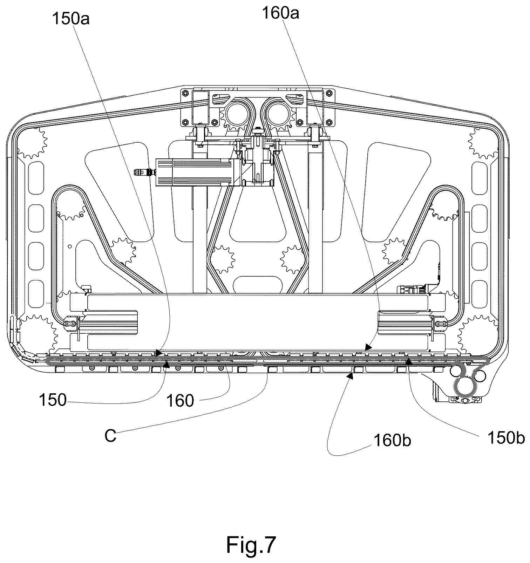

A first embodiment represented in Figure 7, provides that the head 100 comprises a single flexible loading plane 150.

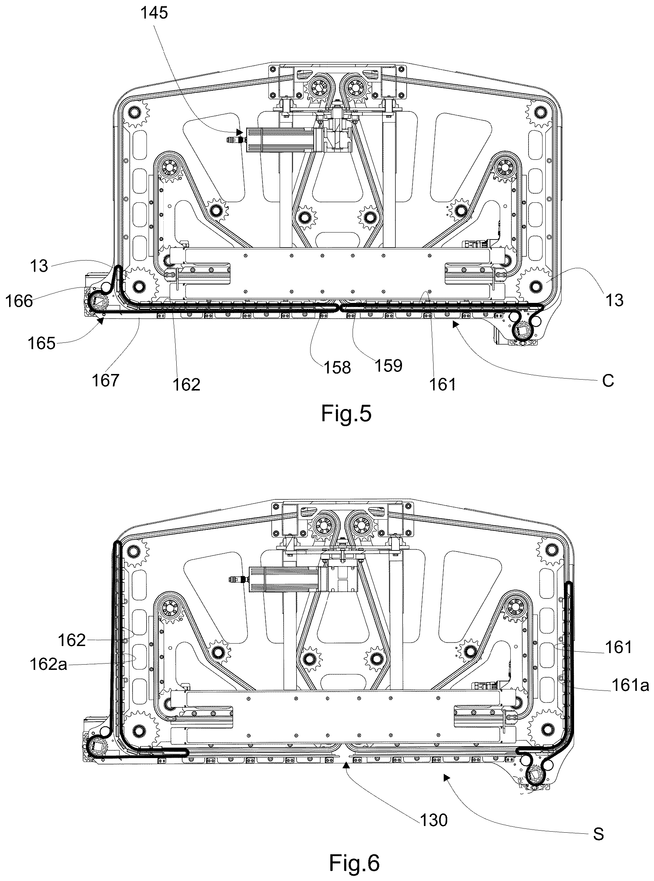

A second embodiment represented in Figures 5 and 6, provides that the head 100 comprises two flexible loading planes, a front flexible loading plane 151, and a rear flexible loading plane 152.

The term front also in the following refers to the side of the head 100 from which the group of products 200 enters, and vice versa, the term rear refers to the side of the head 100 opposite the inlet of products 200.

According to a preferred embodiment, the flexible planes 150, 151, 152, are moved between two operating positions.

A first operating position is defined as the unloading position S of products 200, wherein the group of products 200 is completely unloaded from the head 100.

The unloading position S consists in a position in which the flexible plane 150 and/or the front flexible front plane 151, and the rear flexible plane 152, are positioned such as to define a lower opening 130 of the frame 110 for unloading products 200.

A second operating position is defined as support position C of products 200, in which the group of products 200 is completely contained within the head 100.

The support position C consists in a position in which the flexible loading plane 150, or the front 151, and the rear 152 flexible loading planes, are positioned on a same horizontal plane, to receive and support the groups of products 200.

The flexible plane 150, or the front and rear flexible planes 151, 152 in this case occlude at least partially, or totally, the lower opening 130.

In the first embodiment, the flexible plane 150 is configured to move from the unloading position S, in which it defines the lower opening 130 of the frame 110 to the support position C in which it occludes at least partially, or totally, said lower opening 130, and vice versa following an articulated path along at least two different directions.

In the second embodiment, the flexible front plane 151 and the flexible rear plane 152 are movable between the unloading position S, in which they move away from each other, and the support position C in which they move closer to each other and vice versa, each plane 151, 152 following an articulated path along at least two different directions.

According to an advantageous aspect of the invention the flexible plane 150, and the front and rear flexible planes 151, 152, while passing from the support position C to the unloading position S, move in an articulated manner, along at least two different directions, for example horizontal and vertical, preferably following a curvilinear path.

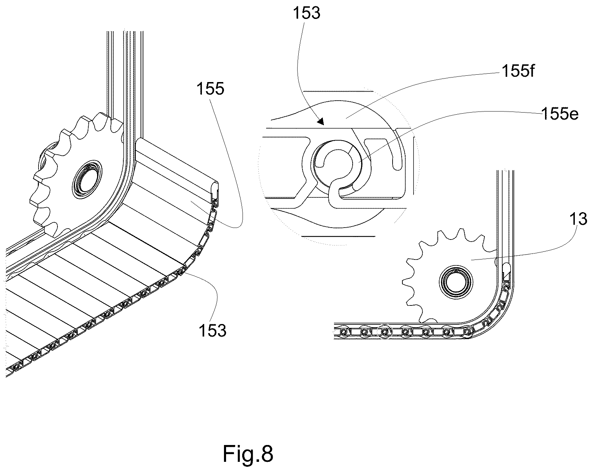

As represented in Figure 8, the flexible plane 150, and the front and rear flexible planes 151, 152 each perform a rotation of approximately 90, preferably at least 90°.

In the first embodiment of the invention, the flexible plane 150, while passing between the loading position C and the unloading position S, translates passing from a position in which it is arranged in a horizontal plane until it assumes a mainly vertical position placing itself in a rear vertical plane opposite to the area where the group of products 200 is introduced. In design variants, the flexible plane 150 may wind around itself in a rear position or rise to occupy an upper area of the head 100.

We will not go further into the detail of the possible unloading positions S of the flexible loading plane 150, 151, 152, as they are known to a person skilled in the art and in any case not limiting the invention.

In the second embodiment of the invention, the front flexible plane 151 and the rear flexible plane 152, while passing between the loading position C and the unloading position S, are configured to be moved so as to translate, moving away from each other, moving from a horizontal position in which they are arranged in a same horizontal plane until a vertical position is reached so as to be opposite and substantially arranged in preferably parallel vertical planes.

Thanks to this solution, the dimension of the head 100 is smaller as the flexible plane 150, 151, 152, when in unloading position S, does not occupy space protruding from the head 100 for its opening.

According to a preferred embodiment of the invention, the flexible loading plane 150, 151, 152, comprises a plurality of modules 155, arranged adjacent to each other to form a flexible plane also referred to in the jargon as a roller shutter.

Preferably, said modules 155 are made of composite and/or metal material.

Said modules 155 have an elongated shape extending between the side panels 111, 112.

The thickness of the module 155 is as small as possible, preferably between 5mm and 25mm to reduce the fall of products 200 as they are deposited.

Similarly, the width of the modules 155 has a smaller size, preferably between 10mm and 60mm to improve winding and the possibility of following an articulated path along at least different directions.

According to one embodiment, the flexible loading plane 150, 151, 152, comprises connection elements 153 to connect each module 155 with the adjacent one.

Preferably said connection elements 153 are of a rotatable type so as to allow the rotation of one module 155 relative to the adjacent module along an axis extending in the direction of the length of said module 155.

One embodiment represented in Figure 8 provides that said connection elements 153 are integrated into the module 155, which for example comprise a protrusion 155e on one side and a recess 155f on the other side, adapted to engage one in the other allowing at least a rotation.

According to an aspect of the invention, the flexible loading plane 150, 151, 152 comprises pulling elements 170, for handling the flexible loading plane 150, 151, 152 itself.

Preferably said pulling elements 170 are of the belt or chain deformable type, etc.

In particular, said pulling elements 170, may be mechanically connected to at least one module 155 and preferably at the two ends 155c, 155d facing the side panels 111, 112.

A preferred embodiment wherein the pulling elements 170 are of the roller chain type 171 is represented in the figures.

In particular, each module 155 adjacent to a previous or following module 155 may be connected to an adjacent link of the roller chain 171.

Since the module 155 is connected to the deformable pulling elements 170, this allows the modules 155 to follow the same path as the pulling elements 170.

Said pulling elements 170 preferably slide inside dedicated guides 180 arranged at the side panels 111, 112.

Thanks to this solution, the flexible loading plane 150, 151, 152 may move along different directions and preferably along curved trajectories.

Said guides 180 are preferably made of polyethylene.

The guides 180 may be made of polyethylene to facilitate the sliding and handling of the pulling elements 170. The guides 180 may be interspersed with winding elements 13, preferably positioned at changes of direction.

The invention provides that by passing from the unloading position S to the support position C or vice versa, said planes 150, 151, 152, rotate around the winding element 13, to pass from the vertical to the horizontal position and vice versa.

In preferred embodiments, the roller chain 171 assumes a closed-loop shape, profiling the shapes of the side panels 111, 112 of the main frame 110.

We will not go further into the details of the handling system of the flexible loading plane 150, 151, 152, as they are known to a person skilled in the art and are not limiting the invention.

According to one embodiment, the gripping head 100 comprises at least one first drive unit 10 configured to move the flexible loading planes 150, 151, 152.

In order to transmit motion to said planes 150, 151, 152, the first drive unit 10 may comprise a motor or gear motor and any power transmission elements such as toothed wheels, pinions, pulleys, etc. and respective drive chains or belts, alternatively the first drive unit may comprise electric, or hydraulic actuators, etc.

In case a single flexible loading plane 150 is present the first drive unit 10 may comprise a motor or gear motor directly keyed to a shaft at the ends of which it transmits motion to the pulling elements 170.

In case a front flexible loading plane 151 and a rear flexible loading plane 152 are present, a possible embodiment may provide that the first drive unit 10 transmits motion to both said flexible loading planes 151, 152.

Thanks to these features, a cost-effective solution that guarantees synchronised handling of the front 151 and rear 152 flexible loading plane, is obtained.

In an alternative embodiment of the invention, not shown in the figure, the gripping head 100 may comprise a first front drive unit and a first rear drive unit, in particular said first front drive unit is mechanically connected to the front flexible plane 151, and the first rear drive unit is mechanically connected to the rear flexible plane 152, thereby said planes may be independently moved closer to or away from each other.

In particular, the first front drive unit, and the second rear drive unit, may comprise a motor or gear motor and any power transmission elements such as toothed wheels, pinions, pulleys, etc. and their respective chains or belts, alternatively they may comprise electric or hydraulic actuators, etc.

In a design variant, the first front and rear drive unit may comprise a motor or gear motor directly keyed to a respective shaft at the ends of which it transmits motion to the pulling elements 170 of each of the two flexible planes 151, 152.

Preferably said first drive units 10, are installed on the frame 110 of the gripping head 100 in particular near the support 120 and/or the connecting elements 115.

According to a preferred embodiment, each flexible loading plane, whether a single flexible loading plane 150 or composed of two front and rear portions 151, 152, is surrounded by a rolling belt 160, 161, 162.

In particular, the flexible loading plane 150 is surrounded by a conveyor belt 160.

As represented in Figures 5 and 6, the front flexible loading plane 151 is surrounded by the front rolling belt 161, and the rear flexible loading plane 152 is surrounded by the rear rolling belt 162.

The rolling belts 160, 161, 162, each winding a flexible loading plane 150, 151, 152, form a closed loop.

The rolling belts 160, 161, 162 are adapted to run endlessly, i.e. continuously along the loading plane 150, 151, 152. Preferably, sliding takes place bi-directionally.

Therefore, the rolling belt 160, 161, 162 contacts an upper surface 150a, 151a, 152a and preferably a lower surface 150b, 151b, 152b of the flexible loading plane 150, 151, 152.

In particular, the rolling belt 160, 161, 162 contacts and slides on an upper 155a and lower 155b side of the modules 155, respectively.

According to embodiments of the invention, the rolling belt 160, 161, 162 is of the modular chain type or of the fabric or rubber-coated belt type, etc.

According to preferred embodiments of the invention, the modules 155 are coated, preferably on the upper 155a and/or lower side 155b with low-friction materials, for example PE polyethylene or may be surface-treated for example with PTFE polytetrafluoroethylene coating.

Thanks to this solution, the friction between the module 155 and the rolling belt 160, 161, 162 is reduced, reducing wear and optimising handling thereof.

According to preferred embodiments, the flexible loading plane 150 and front 151 and rear 152 comprises a first and a last module 158, 159, with a rounded profile, designed according to the technical specifications of the rolling belt 160, 161, 162.

In fact, said first and last modules 158, 159, in addition to serving as a support, act also as a nosebar, around which the rolling belt 160, 161, 162 winds to reverse the direction by 180°.

In advantageous embodiments, the gripping head 100 comprises side containment elements 156 and preferably said side containment elements 156 are arranged along the flexible loading plane, 150 151, 152, in particular on the upper surface, 150a, 151a, 152a.

More specifically, the side containment elements 156 are arranged near the side edges of the flexible loading planes 150, 151, 152, i.e., adjacent to the side panels 111, 112.

In fact, said side containment elements 156 engage on side edges 165 of the rolling belt 160, 161, 162, to prevent the accidental transverse movement relative to an advancement direction.

In advantageous embodiments of the invention, the side containment elements 156 comprise an extension 156a, directed from the side panels 111, 112 towards the centre of the flexible loading plane 150, 151, 152.

Advantageously, these extensions 156a, are adapted to prevent and/or limit the detachment of the rolling belt, 160, 161, 162 from the upper surface 150a, 151a, 152a, of the flexible loading plane 150, 151, 152.

In fact, they delimit the space within which the rolling belt 160, 161, 162 can move away from the upper surface 150a, 151a, 152a of the flexible loading plane 150, 151, 152 upwards, contacting an upper portion 160a, 161a, 162a of the rolling belt 160, 161, 162, without, however, blocking the advancement of said rolling belt 160, 161, 162.

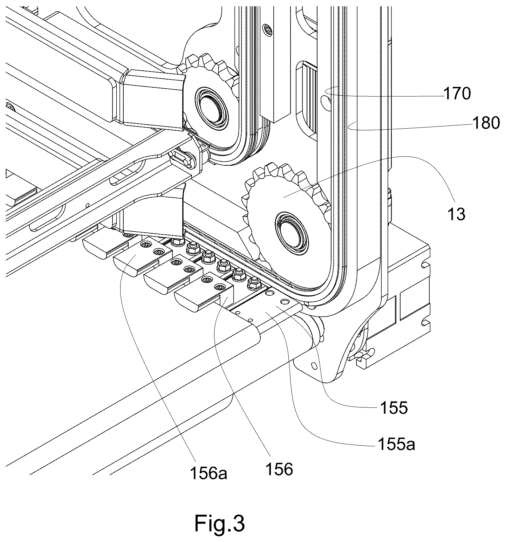

In preferred embodiments of the invention as represented in Figure 3, the side containment elements 156 are each mechanically installed on a respective module 155, preferably at the ends 155c, 155d of said module 155, i.e., near the side panels 111, 112, and preferably on an upper side 155a thereof.

In advantageous embodiments of the invention, the gripping head 100 comprises support elements 157, which are preferably fixed to the side panels 111, 112 and extend towards the centre of the flexible loading plane 150, 151, 152.

Advantageously, said support elements 157 delimit the space within which the rolling belt 160, 161, 162 can move away from the lower surface 150b, 151b, 152b of the flexible loading plane 150, 151, 152 downwards, in particular contacting a lower portion 160b, 161b, 162b of the rolling belt 160, 161, 162.

Preferably said side containment elements 156 and/or support elements 157 are made of plastic material such as polyethylene or metal material to improve sliding and reduce wear of the rolling belt 160, 161, 162.

According to preferred embodiments of the invention, the gripping head 100 comprises a second drive unit 20, configured to drive the rolling belt 160 so that it runs around the flexible loading plane 150.

In particular, the second drive unit 20 is configured to allow the rolling belt 160 to slide bidirectionally, i.e. it can slide both clockwise and anticlockwise.

Preferably said second drive unit 20 is fixed integrally to one of the side panels 111, 112.

In case both the front rolling belt 161 and the rear rolling belt 162 are present, the gripping head 100 comprises a second front drive unit 21, and a second rear drive unit 22.

The second front drive unit 21 is mechanically connected to the front rolling belt 161, and allows it to move and thus slide along the front flexible plane 151 preferably bidirectionally, i.e. clockwise and anticlockwise.

The second rear drive unit 22, is mechanically connected to the rear rolling belt 162 and allows it to move and thus slide along the rear flexible plane 152 bidirectionally, i.e. clockwise and anticlockwise.

This allows to move the rolling belt 160, 161, 162, independently of the handling and position of the flexible loading plane 150, 151, 152.

According to preferred embodiments of the invention the second front drive unit 21 and the second rear drive unit 22 is installed on the frame 110 preferably mechanically associated with one of the two side panels 111, 112 near the flexible plane 150, 151, 152.

Said second drive unit 20, second front drive unit 21 and second rear drive unit 22, may comprise a motor or gear motor and any power transmission elements such as toothed wheels, pinions, pulleys, etc. and respective drive chains or belts, alternatively the first drive unit may comprise electric or hydraulic actuators, etc.

In embodiments of the invention, the second drive unit 20, the second front drive unit 21 and the second rear drive unit 22 are positioned below the flexible plane 150, 151, 152 arranged on a horizontal plane, in the support position C.

In a preferred embodiment, the second front drive unit 21 is positioned below the flexible loading plane 151, when in the support position C to ensure the inlet of the groups of products 200.

A possible embodiment of the invention is represented in Figure 5 and 6 in which the second rear drive unit 22 is positioned on the outer rear side of the rear flexible loading plane 152 when it is in the vertical position and at approximately the same height as the rear flexible loading plane 152 in the horizontal position.

This allows to move closer the pallet being formed with no need for an additional stroke in the vertical direction of the robotic handling structure 400 of the head 100.

According to an alternative embodiment, not shown in the figure, said second drive unit 20 and/or front 21 and/or rear 22 is installed on a device that is independent of the head 100, i.e. that it is not installed on the head 100, and is not mechanically connected to the head 100.

Said independent device may comprise, for example, a conveyor belt moved by said second drive unit 20 and/or front 21 and/or rear 22 and preferably positioned near the preparation/forming conveyor 300.

Said independent device is positioned so that it is located below the head 100, when the gripping head 100 is arranged alongside the preparation/forming conveyor 300 for picking up the group of products 200.

When the head 100 is in said position, the conveyor belt of the independent device is in contact with an underlying portion of the rolling belt 160, 161, 162 of the head 100. The friction due to the contact of the rolling belt 160, 161, 162 with the independent device generates the sliding of the rolling belt 160, 161, 162 around the flexible loading plane 150 and allows the loading of the group of products 200 inside the head 100.

This solution simplifies the head 100 and mainly affects the weight reduction of said head 100, as the drive unit 20 and/or front 21 and/or rear 22 are not installed thereon.

Preferably, the rolling belt 160, 161, 162, comprises anti-slid elements 165 comprising winding and/or tensioning rollers 166 and/or support planes 167.

This prevents slippage of the rolling belt 160, 161, 162.

The invention, preferably for embodiments comprising the use of a modular chain belt, provides for a support 167, preferably made of steel.

For example, the support 167 is preferably positioned at the second drive unit 20, front 21 and/or rear 22.

Said support 167 is configured to prevent slippage of the rolling belt 160, 161, 162 and guide it in maintaining the correct position during movement, in particular near the curvature zone of the flexible loading plane 150, 151, 152.

Advantageously, the support 167 is preferably located at a shorter distance than the chain pitch, to perform the anti-slip function. The same function may be provided by the winding and/or tensioning rollers 166.

Said winding and/or tensioning rollers 166 are preferably positioned near the second drive units 20, front 21 and/or rear 22.

In preferred embodiments, the gripping head 100 comprises a compaction device 140.

Said compaction device 140 has the purpose of guiding the group of products 200 in position and compacting and/or holding it in place.

Advantageously, said compaction device 140 is mechanically associated with the main frame 110, and comprises side walls 141, 142 opposite to each other and arranged alongside to the side panels 111, 112, preferably the side walls 141, 142 are parallel to the side panels 111, 112.

Furthermore, the compaction device 140 also comprises a front wall 143 and a rear wall 144 opposite to each other and arranged orthogonal to the side walls 141, 142.

Said side walls 141, 142 and/or front and rear walls 143, 144 preferably comprise a plane contact surface to ensure an effective grip on the group of products 200.

In particular, the side walls 141, 142 and the front wall and the rear wall 143, 144 are movable closer/away towards the centre of the frame 110.

The compaction device 140 comprises a motorisation assembly 145. A possible embodiment of the motorisation assembly 145 for handling the side walls 141, 142 is represented in Figure 5.

Said motorisation assembly 145 is preferably positioned on the main frame 110 at the connecting elements 115 and may comprise a pair of connecting rods, which transmit the motion to the side walls 141, 142 preferably installed on a sliding carriage mounted on linear guides.

Said motorisation assembly 145 may also comprise one or more motors respectively intended to actuate the front and rear walls 143, 144 ensuring independent control of movement.

As represented in Figures 5 and 6, said front and rear walls 143, 144 may be mechanically connected to roller chains guided along a path defined by guide elements preferably made of polyethylene.

In particular, the rear wall 144 may be activated to also act as a moving obstacle during loading, accompanying the group of products 200 by means of horizontal translation.

Preferably, the front wall 143, must be able to be positioned in an upper area of the head 100 to allow the inlet of the group of products 200 and only once the products 200 are fully supported on the rolling belt 160, 161, 162, i.e. once they have entered the head 100, the front wall 143 may lower in a vertical direction and then translate in a horizontal direction to serve as a movable obstacle during the positioning of the layer on the head 100.

As known to a person skilled in the art, the side walls 141, 142, and the front and rear walls 143, 144 can be made and moved in various different ways, without thereby limiting the protective scope of the invention.

Thanks to this solution, the group of products 200, which is located on the rolling belts 160, 161, 162, can be compacted by the compacting device 140 along 4 sides, opposite to each other two by two.

An object of the invention is also the palletising machine 500 comprising a gripping head 100, fixed and/or anchored to a robotic handling structure 400, said gripping head 100 being adapted to pick up, from a preparation/forming conveyor 300, groups of products 200 arranged to form a layer and adapted to deposit them in a storage area.

The operating method of the gripping head 100 is also an object of the invention.

The method provides at least a step of loading and a step of depositing the group of products 200.

In detail, the method firstly provides to move the gripping head 100 closer to the preparation/forming conveyor 300 on which the groups of products 200 to be transferred are arranged.

In particular, the flexible loading plane 150, 151, 152 is actuated so that it assumes the support position C, i.e. the position in which the flexible loading plane 150, 151, 152 is substantially arranged in a horizontal plane.

This operation may be performed concurrently or at a step before or after the gripping head 100 has moved closer to the preparation/forming conveyor 300.

Assuming the support position C, the flexible loading plane 150, 151, 152 occludes, at least partially, or totally
the lower opening of the gripping head 100.

In particular, the flexible loading plane 150, 151, 152, being arranged on a horizontal plane, is positioned in continuity with the preparation/forming conveyor 300 on which the groups of products 200 are deposited.

After that, the method provides to start the rolling belt 160, 161, 162 sliding along the flexible planes 150, 151, 152.

If not already started, the preparation/forming conveyor 300 is started at the same time.

In particular, the rolling belt 160, 161, 162 and the preparation/forming conveyor 300 are started to slide along a same direction, so that groups of products 200 may be transferred from the preparation/forming conveyor 300 to the head 100.

The preparation/forming conveyor 300 and the rolling belts 160, 161, 162, slide along the same direction until the groups of products 200 are completely transferred from the preparation/forming conveyor 300 into the gripping head 100, allowing for an efficient handling of the inlet flow of products 200.

Therefore, during the process of picking up the groups of products 200, these are transferred into the head, on the flexible loading plane 150, 151, 152 without the use of pushing means external to the gripping head 100 or the robot 400 that moves it, but by the advancement of the rolling belt 160, 161, 162.

According to an aspect of the invention, said method provides to adjust the speed of the rolling belt 160, 161, 162, around the flexible loading plane 150, 151, 152, so as to have a speed equal to or greater than or lower than that of the preparation/forming conveyor 300. A speed ratio dedicated to each product will facilitate the inlet of the group of products into the head

An aspect of the invention provides to take advantage of the rear wall 144 to retain/accompany the first rows of products 200 into the gripping head 100.

An aspect of the invention provides to take advantage of the front wall 143 to accompany the products 200 into the gripping head 100, in particular, when the products have entered the gripping head, the front wall 143 is started.

In particular, the front wall 143 is initially started to lower and then to move horizontally, and by contacting the last rows of the products 200 pushes them/or contains them orthogonally to the sliding direction of the rolling belt 160, 161, 162.

In fact, when the products 200 are to be transferred from the preparation/forming conveyor 300 into the gripping head 100, the front wall 143 is in a higher position in the gripping head 100, to leave the inlet free. Then, when the products 200 are supported by at least one portion of flexible loading plane 150, 151, 152 but have not yet completed positioning, the front wall 143 is lowered.

According to an aspect of the invention, said method provides to adjust the advancement of the rolling belt 160, 161, 162, so as to impart stops and/or slowdowns to the rolling belt 160, 161, 162, to obtain greater spacing or compaction of the products 200, depending on the palletising requirements.

In particular, said stops and/or slowdowns may or may not occur at constant intervals.

According to an advantageous aspect, when the groups of products 200 have been transferred from the preparation/forming conveyor 300 into the gripping head 100 onto the flexible loading plane 150, 151, 152, the sliding of the rolling belt 160, 161, 162 is stopped.

Thus, said method provides for the possibility of compacting the groups of products 200, in particular by compacting two sides opposite to each other or compacting the four sides opposite to each other two by two.

Then the gripping head 100 is positioned over the area where the gripping head 100 must deposit the groups of products 200.

Then the flexible loading plane 150, 151, 152 is actuated, in particular actuating it, it rotates by 90° or at least 90° preferably around a winding element 13.

Preferably, the front flexible loading plane 151 and the rear flexible loading plane 152 can open either synchronously or nonsynchronously with each other.

During this step, the flexible loading plane 150, 151, 152 assumes the product unloading position S, i.e. the flexible loading plane 150, 151, 152 is mainly arranged vertically, next to the deposited group of products 200.

In one embodiment, while the flexible loading plane 150, 151, 152, assumes the unloading position S, the rolling belt 160, 161, 162, remains stationary.

According to an alternative embodiment, said method provides that while the flexible loading plane 150, 151, 152, assumes the unloading position S, the rolling belt 160, 161, 162, slides around the flexible loading plane 150, 151, 152, and cooperates to transfer the groups of products 200, advancing in the opening direction or in the opposite direction.

Thanks to the bi-directionality, and to the different speeds at which the rolling belts 160, 161, 162 are moved, and also thanks to the ability to adapt the advancement speed of the rolling belt 160, 161, 162 to the lifting motion of the flexible loading planes 150, 151, 152, a smooth and precise transition is guaranteed, allowing maximum flexibility in fulfilling a wide variety of palletising patterns of groups of products 200.

An operating example provides that the flexible loading plane 150, to assume the unloading position, shifts to the left, and the upper portion of the rolling belt 160a advances to the left so as to push the products 200 towards the rear wall 144. Vice versa, if the upper portion of the rolling belt 160a advances to the right, this contributes to pushing the products 200 towards the front wall 143.

Another operating example, if a front flexible loading plane 151, and a rear flexible loading plane 152 are present, in the deposition step the front flexible loading plane 151 and the rear flexible loading plane 152 move away from each other, and the respective upper portion of the rolling belt 161a, 162a can advance in the same direction along which each front flexible loading plane 151 and rear flexible loading plane 152 is moving; spaces can thereby be created at the centre of the layer of products 200 which, in the deposition step, allow to obtain an enlarged layer in which the products 200 are more evenly distributed over the entire pallet area.

Vice versa, if the respective upper portion of the rolling belt 161a, 162a advances in the direction opposite to that along which each front flexible loading plane 151 and rear flexible loading plane 152 is moving, thus towards the centre of the head 100, a layer of products 200 may be created which is compact when deposited and in which the products 200 are distributed as distant as possible from the edges of the pallet.

Therefore, the winding path of the two rolling belts 160, 161, 162 which is bi-directional and independent of the position of the flexible loading planes 150, 151, 152, allows to assess and programme, on a case-by-case basis, the optimum cycle for depositing the layer depending on the type of product 200 and on the palletising pattern.

The method also provides for the possibility of further compacting the group of products 200 once they have been deposited, so as to reduce the spaces created as they are deposited, for example by activating the compacting device 140.

In fact, the side walls 141, 142 and the front and rear walls 143, 144, position themselves at the sides of the deposited group of products 200 and translate horizontally towards the centre of the head 100.

All of the aforesaid features contribute to allowing for a high degree of operating flexibility, optimising both load handling and storage of the products 200.

It is understood however that what is described above has an illustrative and non-limiting purpose, therefore, possible variants of detail that may be necessary for technical and/or functional reasons, are considered from now falling within the same protective scope defined by the claims indicated below.

## Claims

1. Gripping head (100) for groups of products (200) arranged to form a layer comprising a main frame (110) comprising two opposite side panels (111, 112) to which a support (120) is associated at the top to be fixed and/or anchored to a robotic handling structure (400) and with which a flexible loading plane (150, 151, 152) is associated at the bottom suitable for supporting said groups of products (200), movable between an unloading position (S) of the products (200), wherein it defines a lower opening (130) of the frame (110) and a support position (C) of the products (200), wherein it occludes, at least partially, or totally, said lower opening (130) and configured to move from the support position (C) to the unloading position (S) and vice versa following an articulated path along at least two different directions **characterised in that** said gripping head (100) comprises a rolling belt (160, 161, 162) which is shaped in a closed loop to wind the flexible loading plane (150, 151, 152) and adapted to slide around said flexible loading plane (150, 151, 152).

2. Gripping head (100) according to claim 1, comprising a front flexible loading plane (151) and a rear flexible loading plane (152) movable between the unloading position (S) of the products (200), wherein they move away from each other, and a support position (C) of the products (200), wherein they move closer to each other, each plane (151, 152) configured to move from the support position (C) to the unloading position (S) and vice versa following an articulated path along at least two different directions **characterized in that** said gripping head (100) comprises a front rolling belt (161) that is wound in a loop and adapted to slide around said front flexible loading plane (151) and a rear rolling belt (162) that is wound in a loop and adapted to slide around said rear flexible loading plane (152).

3. Gripping head (100) according to any one of the preceding claims, wherein the flexible loading plane (150), the front flexible loading plane (151) and the rear flexible loading plane (152) when in the support position (C) of the products (200), is arranged in a horizontal plane and when in the unloading position (S) is mainly arranged in a vertical plane extending, preferably towards the support (120).

4. Gripping head (100) according to any one of the preceding claims, wherein the flexible loading plane (150), the front flexible loading plane (151) and the rear flexible loading plane (152) passes from the support position (C) to the unloading position (S) and vice versa by performing a curvilinear path, preferably by performing a rotation of at least 90° preferably around a winding element (13).

5. Gripping head (100) according to any one of the preceding claims, comprising a first drive unit (10) to move said flexible loading plane (150) and/or said front flexible loading plane (151) and/or said rear flexible loading plane (152) between the unloading position (S) and the support position (C) and vice versa.

6. Gripping head (100) according to any one of the preceding claims, comprising a first front drive unit and a first rear drive unit mechanically connected to the front loading plane (151) and the rear loading plane (152), respectively, for moving them closer to/away from each other, independently of each other.

7. Gripping head (100) according to any one of claims 5 to 6, wherein the first drive unit (10), the first front drive unit and/or the first rear drive unit are installed on the frame (110) near the support (120).

8. Gripping head (100) according to any one of the preceding claims, comprising a second drive unit (20) to drive the rolling belt (160) to slide, preferably bi-directionally, around the flexible loading plane (150).

9. Gripping head (100) according to any one of the preceding claims, comprising a second front drive unit (21) mechanically connected to the front rolling belt (161) to have it slide, preferably bi-directionally, around the front flexible loading plane (151) and a second rear drive unit (22) mechanically connected to the rear rolling belt (162) to have it slide, preferably bi-directionally, around the rear flexible loading plane (152).

10. Gripping head (100) according to any one of the preceding claims, wherein the flexible loading plane (150, 151, 152) comprises a plurality of modules (155), each arranged adjacent and parallel to the other, and comprises pulling elements (170) to enable handling thereof, mechanically connected to at least one module (155) and preferably at the two ends (155c, 155d) facing the side panels (111, 112).

11. Gripping head (100) according to claim 10, wherein said modules (155) are coated with low-friction coefficient materials, preferably polyethylene or coated with polytetrafluoroethylene.

12. Gripping head (100) according to any one of the preceding claims, comprising a compaction device (140) mechanically associated with the main frame (110) comprising side walls (141, 142) opposite to each other and arranged alongside the side panels (111, 112) and preferably a front wall (143) and rear wall (144) opposite to each other and arranged orthogonally to the side walls (141, 142) said side walls (141, 142) and front and rear walls (143, 144) being movable closer towards the centre of the frame (110) to compact the group of products (200).

13. Method of operation for picking up from a preparation/forming conveyor (300), groups of products (200) arranged to form a layer by means of a robotic structure (400) which moves a gripping head (100) and with which a flexible loading plane (150, 151, 152) is associated at the bottom suitable to support said groups of products (200), - cause said flexible loading plane (150, 151, 152) to assume the loading position (C) in which it occludes at least partially, or totally, the lower opening (130) of the gripping head (100) so that it is parallel to the preparation/forming conveyor (300);
- position said flexible loading plane (150, 151, 152) in continuity with the preparation/forming conveyor (300) that supports the groups of products (200) to be picked up;
**characterized in that said method provides to:**
- activate the preparation/forming conveyor (300) and in the same direction cause the rolling belt (160, 161, 162) to slide along the flexible loading plane (150, 151, 152) until the groups of products (200) are completely transferred from the preparation/forming conveyor (300) into the gripping head (100),
- preferably stop the rolling belt (160, 161, 162) from sliding,
- position the gripping head (100) above the area where it is to deposit the groups of products (200);
- lead the flexible loading plane (150, 151, 152) to the unloading position (S) of the products (200), placing it mainly in a vertical direction preferably by a rotation of approximately 90°.

14. Method according to claim 13, wherein as the flexible loading plane (150, 151, 152) passes from the support position (C) to the unloading position (S), the rolling belt (160, 161, 162) advances in the opening direction or in the opposite direction.

15. Palletising machine (500) comprising a gripping head (100) according to claim 1, fixed and/or anchored to a robotic handling structure (400) said gripping head (100) being adapted to pick up, from a preparation/forming conveyor (300), groups of products (200) arranged to form a layer and adapted to deposit them in a storage area.
